(19) Europäisches Patentamt
European Patent Office
Office européen des brevets

(11) Publication number: 0 067 954
B1

(12) **EUROPEAN PATENT SPECIFICATION**

(45) Date of publication of patent specification: **28.08.85**

(21) Application number: **82103990.6**

(22) Date of filing: **07.05.82**

(51) Int. Cl.$^4$: **G 03 G 5/07**, G 03 G 5/04, G 03 G 5/05, G 03 G 5/09, C 08 F 20/18, C 08 F 20/36, C 08 F 220/18, C 08 F 220/36

# (54) Organic photoconductive compositions for electrophotography.

(30) Priority: **15.05.81 JP 72186/81**

(43) Date of publication of application:
**29.12.82 Bulletin 82/52**

(45) Publication of the grant of the patent:
**28.08.85 Bulletin 85/35**

(84) Designated Contracting States:
**CH DE FR GB LI NL**

(56) References cited:
**EP-A-0 005 274**
**DD-A- 133 277**

(73) Proprietor: **Kabushiki Kaisha Toshiba**
**72, Horikawa-cho Saiwai-ku**
**Kawasaki-shi Kanagawa-ken 210 (JP)**

(72) Inventor: **Sugiuchi, Masami**
**1138, Nishiyamachi Hodogaya-ku**
**Yokohama-shi Kanagawa-ken (JP)**
Inventor: **Miyamura, Masataka**
**4-25-4, Higashi Shichirigahama**
**Kamakura-shi Kanagawa-ken (JP)**
Inventor: **Sakamoto, Masanori**
**402,2-4, Shiboguchi Takatsu-ku**
**Kawasaki-shi Kanagawa-ken (JP)**
Inventor: **Nakajima, Yuko**
**No. 102, Sunrise Yamada 1-9-2, Togoshi**
**Shinagawa-ku Tokyo (JP)**

(74) Representative: **Hansen, Bernd, Dr.rer.nat. et al**
**Hoffmann, Eitle & Partner Patentanwälte**
**Arabellastrasse 4**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 067 954 B1

**Description**

The present invention relates to organic photoconductive compositions for electrophotography that are useful for electrophotographic photosensitive materials.

Prior art photoconductive layers containing a photosensitive material assembled in electrophotographic copying machines comprise chiefly an organic or inorganic photoconductive material.

Inorganic photoconductive materials are exemplified, by selenium, zinc oxide, titanium oxide and cadmium sulfide. Although they have a superior photosensitive property, they are inferior having regard to transparency, flexibility, light weight, film-forming property, smooth surface and price. Selenium, in particular, has a disadvantage regarding the toxicity.

On the other hand, organic photoconductive materials are exemplified by condensed polycyclic aromatic compounds such as anthracene, pyrene and perylene; heterocyclic compounds such as pyrazoline derivatives, imidazole derivatives and oxazole derivatives; and polymeric compounds such as poly-N-vinylcarbazole and polyvinylanthracene. These are superior to the above-mentioned inorganic photoconductive materials having regard to transparency, flexibility, light weight, film-forming property, smooth surface and price, hence have extensively been studied for the recent years.

Photosensitive materials containing an organic photoconductive compound, however, have mostly quite a poor photosensitivity as compared with those containing an inorganic photoconductive material such as selenium and zinc oxide, hence only a few of them are practically employed. One of them comprises poly-N-vinylcarbazole (PVK), chemically sensitized with 2,4,7-trinitro-9-fluorenone (TNF).

Although it is a photoconductive material having superior properties such as photosensitivity, darkdecay rate, stability and reproducibility, it has a disadvantage owing to the toxicity of TNF.

Further attempts have been made to improve photosensitivity by the combination of an organic photoconductive compound and a dye sensitizer. However, products thus obtained involve practical problems to be overcome such as poor darkdecay rate and reproducibility over a long period of time due to the instability.

The object of the invention is to provide photoconductive materials having also a superior photosensitivity, noting such advantages as superior transparency, flexibility, light weight, film-forming property, smooth surface and low price that the organic photoconductive materials have. Namely, the object of the invention is to provide organic photoconductive materials having a high sensitivity, low darkdecay rate, well-reproducible photosensitivity after repeated use over a long period of time, and good safety or low toxicity.

According to the invention, there are provided organic photoconductive compositions for electrophotography comprising a polymer having molecular weight of from $10^3$ to $10^6$ containing as main unit(s) an acrylic acid ester derivative and/or methacrylic acid ester derivative represented by the following general formula:

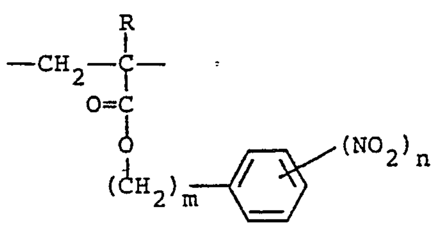

(I)

(wherein, R represents a hydrogen atom or a methyl group; m is an integer of from 1 to 3; and n is an integer of from 1 to 3);
and an electron donor.

The polymer to be employed in the present invention having chiefly the units of formula (I) may be prepared by way of block polymerization or suspension polymerization of an acrylic or methacrylic acid ester derivative represented by the following general formula (II), solely or in combination, optionally in the further presence of other unsaturated copolymerizable ethylenic monomer:

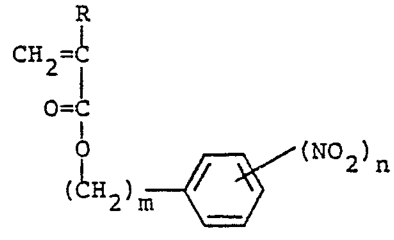

(II)

(wherein, R, m and n have the meaning defined above).

Compounds of formula (II) may be prepared by an esterification of an alcohol having the formula:

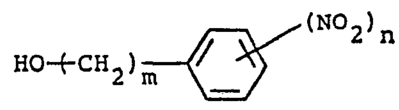

(wherein, m and n have the meaning defined above)
with acrylic or methacrylic chloride in the presence of an organic solvent such as pyridine, accompanying elimination of hydrogen chloride.

Acrylic acid ester derivatives to be employed in the invention include p-nitrobenzyl acrylate, o-nitrobenzyl acrylate, m-nitrobenzyl acrylate, 2,3-dinitrobenzyl acrylate, 2,4-dinitrobenzyl acrylate, 2,5-dinitrobenzyl acrylate, 2,6-dinitrobenzyl acrylate, 3,4-dinitrobenzyl acrylate, 3,5-dinitrobenzyl acrylate, 2,3,4-trinitrobenzyl acrylate, 2,3,5-trinitrobenzyl acrylate, 2,3,6-trinitrobenzyl acrylate, 2,4,5-trinitrobenzyl acrylate, 2,4,6-trinitrobenzyl acrylate, 3,4,5-trinitrobenzyl acrylate, p-nitrophenylethyl acrylate, o-nitrophenylethyl acrylate, m-nitrophenylethyl acrylate, 2,3-dinitrophenylethyl acrylate, 2,4-dinitrophenylethyl acrylate, 2,5-dinitrophenylethyl acrylate, 2,6-dinitrophenylethyl acrylate, 3,4-dinitrophenylethyl acrylate, 3,5-dinitrophenylethyl acrylate, 2,3,4-trinitrophenylethyl acrylate, 2,3,5-trinitrophenylethyl acrylate, 2,3,6-trinitrophenylethyl acrylate, 2,4,5-trinitrophenylethyl acrylate, 2,4,6-trinitrophenylethyl acrylate, 3,4,5-trinitrophenylethyl acrylate, p-nitrophenylpropyl acrylate, o-nitrophenylpropyl acrylate, m-nitrophenylpropyl acrylate, 2,3-dinitrophenylpropyl acrylate, 2,4-dinitrophenylpropyl acrylate, 2,5-dinitrophenylpropyl acrylate, 2,6-dinitrophenylpropyl acrylate, 3,4-dinitrophenylpropyl acrylate, 3,5-dinitrophenylpropyl acrylate, 2,3,4-trinitrophenylpropyl acrylate, 2,3,5-trinitrophenylpropyl acrylate, 2,3,6-trinitrophenylpropyl acrylate, 2,4,5-trinitrophenylpropyl acrylate, 2,4,6--trinitrophenylpropyl acrylate, and 3,4,5-trinitrophenylpropyl acrylate.

Methacrylic acid ester derivatives to be employed in the invention include p-nitrobenzyl methacrylate, o-nitrobenzyl methacrylate, m-nitrobenzyl methacrylate, 2,3-dinitrobenzyl methacrylate, 2,4-dinitrobenzyl methacrylate, 2,5-dinitrobenzyl methacrylate, 2,6-dinitrobenzyl methacrylate, 3,4-dinitrobenzyl methacrylate, 3,5-dinitrobenzyl methacrylate, 2,3,4-trinitrobenzyl methacrylate, 2,3,5-trinitrobenzyl methacrylate, 2,3,6-trinitrobenzyl methacrylate, 2,4,5-trinitrobenzyl methacrylate, 2,4,6-trinitrobenzyl methacrylate, 3,4,5-trinitrobenzyl methacrylate; p-nitrophenylethyl methacrylate, o-nitrophenylethyl methacrylate, m-nitrophenylethyl methacrylate, 2,3-dinitrophenylethyl methacrylate, 2,4-dinitrophenylethyl methacrylate, 2,5-dinitrophenylethyl methacrylate, 2,6-dinitrophenylethyl methacrylate, 3,4-dinitrophenylethyl methacrylate, 3,5-dinitrophenylethyl methacrylate, 2,3,4-trinitrophenylethyl methacrylate, 2,3,5-trinitrophenylethyl methacrylate, 2,3,6-trinitrophenylethyl methacrylate, 2,4,5-trinitrophenylethyl methacrylate, 2,4,6-trinitrophenylethyl methacrylate, 3,4,5-trinitrophenylethyl methacrylate; p-nitrophenylpropyl methacrylate, o-nitrophenylpropyl methacrylate, m-nitrophenylpropyl methacrylate, 2,3-dinitrophenylpropyl methacrylate, 2,4-dinitrophenylpropyl methacrylate, 2,5-dinitrophenylpropyl methacrylate, 2,6-dinitrophenylpropyl methacrylate, 3,4-dinitrophenylpropyl methacrylate, 3,5-dinitrophenylpropyl methacrylate, 2,3,4-trinitrophenylpropyl methacrylate, 2,3,5-trinitrophenylpropyl methacrylate, 2,3,6-trinitrophenylpropyl methacrylate, 2,4,5-trinitrophenylpropyl methacrylate, 2,4,6-trinitrophenylpropyl methacrylate, and 3,4,5-trinitrophenylpropyl methacrylate.

Copolymerizable unsaturated ethylenic monomers to be employed in the invention include, for instance, alkyl acrylates, alkyl methacrylates, styrene, vinyl chloride, vinyl acetate and acrylonitrile. Copolymerization with such monomer will improve such properties of polymers as film-forming property, flexibility and adhesion to substrates. The amount of such copolymerizable monomer in copolymer produced should preferably be kept up to 20 molar percent in view of photoconductivity.

Electron donors to be employed in the present invention may be exemplified by tetrathiotetracene and derivatives thereof; tetrathionaphthalene and derivatives thereof; tetraselenotetracene and derivatives thereof; tetraselenonaphthalene and derivatives thereof; condensed ring compounds such as anthracene and pyrene; hydroquinone; tetraiodohydroquinone; and nitrogen-containing compounds such as benzophenothiazine, phenothiazine, benzidine, tetramethylbenzidine, aniline, dimethylaniline, p-phenylenediamine, tetramethyl-p-phenylenediamine, 2-methyl-p-phenylenediamine, N,N'-dimethyl-p-phenylenediamine, durenediamine, p-diaminodiphenylamine, diaminonaphthalenes, diaminopyrenes, 2-aminofluorene, dialkylaminostyrenes and quinoline.

The ratio of blending the polymer and the electron donor is preferably from 1 to 10 moles of the former based on 1 mole of the latter, when calculated in terms of the monomer (I) that constitutes the polymer. Presence of one mole or less of the polymer will result in a poor film-forming property of the composition, whereas presence of 10 moles or more thereof will result in a poor photoconductive property due to an insufficient formation of the charge-transfer complex.

The compositions according to the invention may contain a binder resin, if necessary. This is particularly preferable if the film-forming property of the composition consisting only of the above-mentioned polymer and electron donor is poor. Such binder resins include, for instance, poly(styrene), poly(vinyl chloride), vinyl chloride/vinyl acetate copolymer, poly(vinyl acetate), poly(vinyl acetal), phenolic resins, epoxy resins and alkyd resins. Incorporation into the composition of such a binder resin should preferably be kept at 10 percent or less based on the composition in order to attain a good photoconductivity.

In order to prepare the photoconductive compositions for electrophotography according to the present invention, a solution of a polymer, an electron donor, and a binder resin if required, at a suitable mixing rate is coated on a conductive support such as aluminium plate, then dried.

The coating solution may be prepared by various ways. For example, a polymer and an electron donor are dissolved in a suitable solvent, while a binder resin is dissolved in the same or different kind(s) of solvent, and finally the both solutions are blended. Such solvents include, for instance, benzene, trichlorobenzene, nitrobenzene, acetone, methanol, methylene chloride, trichloroethylene, carbon tetrachloride, methyl cellosolve, tetrahydrofuran, dioxane, dimethylformamide, dimethylacetamide, dimethyl sulfoxide and N-methylpyrrolidone.

The amount of the organic photoconductive composition of the present invention to be coated on a support is not critical. Usually, it is coated on a support so that a dried film having a 1 to 30 µm thickness may be obtained.

In order for the thus prepared photosensitive material to be applied for electrophotography, the photoconductive layer comprising the photosensitive material may be processed according to the conventional electrophotographic processes such as electrification, imagewise exposure and development transfer.

The organic photoconductive compositions for electrophotography according to the invention described above have a superior photosensitivity, at the visible range, which is comparable to that of the known poly-N-vinylcarbazole chemically sensitized with 2,4,7-trinitro-9-fluorenone, have a low darkdecay rate and a good stability that allows to produce images having a superior reproducibility even after the repeated use over a long period of time. Further, the materials to be employed have no toxicity and therefore may be used safely.

The present invention will be explained by the following working examples.

Example 1

A mixture of 5.0 g of p-nitrobenzyl methacrylate, 0.5g of azobisisobutyronitrile, 2.0 g of poly(vinyl alcohol) and 100 ml of water was refluxed, with stirring, at 90—95°C for 1 hour under nitrogen stream. After allowing to cool to room temperature, precipitates were collected by filtration and the solid product was washed with a warm water and dried. The product was dissolved in tetrahydrofuran and reprecipitated with methanol.

Yield, 3.6 g (72%);

Number average molecular weight, 150,000 (gel permeation chromatography with a standard poly(styrene);

NMR (THF-$d_8$) δ: 2.20 (s, —$CH_3$), 4.21—4.85 (b. —$CH_2$), 6.65—7.40 (m, phenyl);

Glass transition point, 108°C.

1 g of the thus prepared polymer and 0.8 g of anthracene were dissolved in 100 ml of tetrahydrofuran to give a a uniform solution, which was coated on Mylar (Trademark for a polyester film) on which aluminium had been vacuum evaporated to give a thickness of 2—8 µm and dried. Electrification and decay of the film thus prepared were determined with an electrostatic paper analyzer. The result was 7.0 lux sec. when the sensitivity was represented in terms of exposure amount (unit: lux sec.) necessary for the initial surface electric charge to be decayed by 1/2. The photosensitive films prepared were subjected to repeated electrification and exposure 5,000 times in the same conditions as above, after which almost the same results were obtained, thus suggesting the superior reproducibility and stability.

Example 2

1 g of the polymer employed in Example 1 and 0.1 g of tetrathiotetracene were dissolved in a 1:1 mixture of toluene and trichlorobenzene, and the solution was coated on Mylar on which aluminium had been vacuum evaporated, and dried. Measurement of the sensitivity of the film thus prepared performed in the similar manner as in the above-mentioned Example showed the value 6.8 lux sec. The film was then subjected to repeated electrification and exposure 5,000 times in the similar manner as in the above-mentioned Example, after which about the same result as that of the initial stage was obtained, thus showing the absence of fatigue that would affect practical use.

As specifically described above, the novel organic photoconductive compositions according to the present invention possess superior electrification properties such as low darkdecay rate, as well as superior photosensitive properties such as low half-life exposure amount. Such superior properties may be maintained during and after their use over a long period of time.

Example 3

A mixture of 5.0 g of 3,5-dinitrobenzyl methacrylate, 0.5 g of azobisisobutyronitrile, 2.0 g of poly(vinyl alcohol) and 100 ml of water was reacted in the similar manner as in Example 1 to give a polymer.

Yield, 3.0 g (60%);

Number average molecular weight, 186,000 (gel permeation chromatography with a standard poly(styrene));

NMR (THF-$d_8$) δ: (2.50 (s, —$CH_3$), 4.20—5.05 (b, —$CH_2$), 7.71—7.98 (m, phenyl);

Glass transition point, 112°C.

1 g of the polymer thus obtained and 0.1 g of tetrathiotetracene were dissolved in a 1:1 mixture of toluene and trichlorobenzene, and the solution was coated on Mylar on which aluminium had been vacuum evaporated, and dried. Sensitivity measurement of the film thus obtained in the similar manner as in the above-mentioned Example showed the value 6.6 lux sec. The films prepared were subjected to repeated electrification and exposure 5,000 times in the similar manner as in the above-mentioned Example, after which about the same result as that of the initial stage was obtained, thus showing the absence of fatigue that would affect practical use.

Comparative Example 1

In comparison with the photosensitive film of the invention, 0.8 g of PVK and 1 g of TNF were dissolved in 18 ml of o-dichlorobenzene to give a uniform solution, which was coated on Mylar on which aluminium had been vacuum evaporated to give a thickness of 3—10 μm, and dried.

In the same manner as in Example 1, the sensitivity measurement of the PVK-TNF film was performed. The result was 7.0 lux sec. This film was subjected to repeated electrification and exposure in the same conditions as above, but, after 1,000 time repetitions, abnormality was observed.

As seen from the foregoing, the photosensitive film according to the invention, having no toxicity as in the case of the PVK-TNF film, has a good photoconductivity comparable to that of the PVK-TNF film, and has far better reproducibility over a long perid of time than the PVK-TNF film.

**Claims**

1. Organic photoconductive compositions for electrophotography comprising a polymer having molecular weight of from $10^3$ to $10^6$ containing as main units an acrylic acid ester derivative and/or methacrylic acid ester derivative represented by the following general formula:

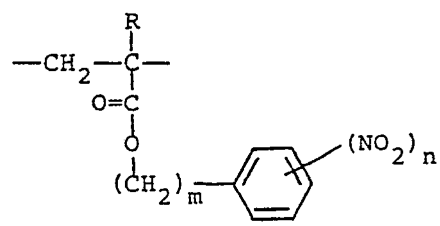

wherein R represents a hydrogen atom or a methyl group, m is an integer of from 1 to 3, and n is an integer of from 1 to 3;
and an electron donor.

2. The composition according to Claim 1, wherein said acrylic acid ester derivative is selected from the group consisting of p-nitrobenzyl acrylate, 3,5-dinitrobenzyl acrylate, p-nitrophenylethyl acrylate, 3,5-dinitrophenylethyl acrylate, p-nitrophenylpropyl acrylate and 3,5-dinitrophenylpropyl acrylate.

3. The composition according to Claim 1, wherein said methacrylic acid ester derivative is selected from the group consisting of p-nitrobenzyl methacrylate, 3,5-dinitrobenzyl methacrylate, p-nitrophenylethyl methacrylate, 3,5-dinitrophenylethyl methacrylate, p-nitrophenylpropyl methacrylate and 3,5-dinitrophenylethyl methacrylate.

4. The composition according to Claim 1, wherein said polymer further contains other unsaturated copolymerizable ethylenic monomer selected from the group consisting of alklyl acrylate, alkyl methacrylate, styrene, vinyl chloride, vinyl acetate and acrylonitrile.

5. The composition according to Claim 4, wherein the amount of said copolymerizable monomer in the copolymer produced is not more than 20 molar %.

6. The composition according to Claim 1, wherein said electron donor is selected from the group consisting of tetrathiotetracene, tetrathionaphthalene, tetraselenotetracene, tetraselenonaphthalene, anthracene and pyrene.

7. The composition according to Claim 1, or 6 wherein the proportion of said polymer and said electron donor ranges from 1 to 10 moles of the former based on 1 mole of the latter.

8. The composition according to Claim 1, wherein the composition further includes a binder resin in an amount of not more than 10% based on the composition.

9. The composition according to Claim 8, wherein said binder resin is selected from the group consisting of poly(styrene), poly(vinyl chloride), vinyl chloride/vinyl acetate copolymer, poly(vinyl acetate), poly(vinyl acetal), phenolic resins, epoxy resins and alkyd resins.

**Patentansprüche**

1. Organische fotoleitfähige Zusammensetzungen zur Elektrofotografie, welche ein Polymer mit einem Molekulargewicht von $10^3$ bis $10^6$ umfassen und als Haupteinheiten ein Acrylsäureester-Derivat und/oder Methacrylsäureester-Derivat entsprechend der folgenden allgemeinen Formel enthalten:

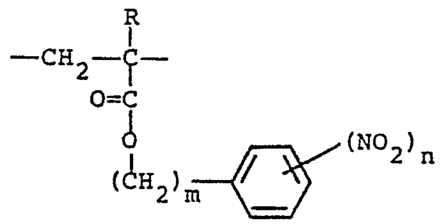

worin R ein Wasserstoffatom oder eine Methylgruppe bedeutet, m eine ganze Zahl von 1 bis 3 darstellt, und n eine ganze Zahl von 1 bis 3 bedeutet;
und einen Elektronendonor umfassen.

2. Zusammensetzung gemäss Anspruch 1, dadurch gekennzeichnet, dass das genannte Acrylsäureester-Derivat ausgewählt, wird aus der Gruppe bestehend aus p-Nitrobenzyl-acrylat, 3,5-Dinitrobenzylacrylat, p-Nitrophenylethyl-acrylat, 3,5-Dinitrophenylethyl-acrylat, p-Nitrophenzylpropyl-acrylat und 3,5 Dinitrophenylpropyl-acrylat.

3. Zusammensetzung gemäss Anspruch 1, dadurch gekennzeichnet, dass das genannte Methacrylsäureester-Derivat ausgewählt wird aus der Gruppe bestehend aus p-Nitrobenzyl-methacrylat, 3,5-Dinitrobenzyl-methacrylat, p-Nitrophenylethyl-methacrylat, 3,5-Dinitrophenylethyl-methacrylat, p-Nitrophenylpropyl-methacrylat und 3,5-Dinitrophenylethyl-methacrylat.

4. Zusammensetzung gemäss Anspruch 1, dadurch gekennzeichnet, dass das genannte Polymer im weiteren andere ungesättigte, copolymerisierbare, ethylenische Monomere enthält, die augewählt sind aus der Gruppe bestehend aus Alkylacrylat, Alkylmethacrylat, Styrol, Vinylchlorid, Vinylacetat und Acrylonitril.

5. Zusammensetzung gemäss Anspruch 4, dadurch gekennzeichnet, dass die Menge des genannten copolymerisierbaren Monomeren in dem hergestellten Copolymeren nicht mehr als 20 Mol-% beträgt.

6. Zusammensetzung gemäss Anspruch 1, dadurch gekennzeichnet, dass der Elektronen-Donor ausgewählt wird aus der Gruppe bestehend aus Tetrathiotetracen, Tetrathionaphthalin, Tetraselenotetracen, Tetraselenonaphthalin, Anthracen und Pyren.

7. Zusammensetzung gemäss Anspruch 1 oder 6, dadurch gekennzeichnet, dass der Anteil des genannten Polymeren und des genannten Elektronen-Donors im Bereich von 1:10 Mol des ersteren, bezogen auf 1 Mol des letzteren, liegt.

8. Zusammensetzung gemäss Anspruch 1, dadurch gekennzeichnet, dass die Zusammensetzung im weiteren ein Harz-Bindemittel in einer Menge von nicht mehr als 10%, bezogen auf die Zusammensetzung, umfasst.

9. Zusammensetzung gemäss Anspruch 8, dadurch gekennzeichnet, dass das genannte Harz-Bindemitel ausgewählt wird aus der Gruppe bestehend aus Poly(stryol), Poly(vinylchlorid), Vinylchlorid/Vinylacetat-Copolymer, Poly(vinylacetat), Poly(vinylacetal), phenolische Harze, Epoxyharze und Alkydharze.

**Revendications**

1. Compositions photoconductrices organiques pour électrophotographie comprenant un polymère ayant un poids moléculaire compris entre $10^3$ et $10^6$ renfermant comme unités principales un dérivé d'ester d'acide acrylique et/ou un dérivé d'ester d'acide méthacrylique représenté par la formule générale suivante:

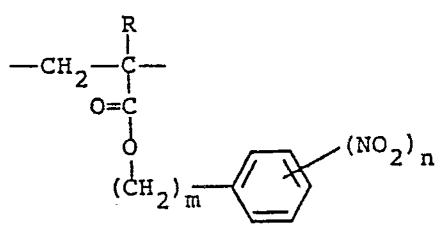

dans laquelle R représente un atome d'hydrogène ou un groupe méthyle; m est un entier de 1 à 3, et n est un entier de 1 à 3;
et un donneur d'électrons.

2. Composition selon la revendication 1, dans laquelle ledit dérivé d'ester d'acide acrylique est choisi dans le groupe constitué du p-nitrobenzyl-acrylate, 3,5-dinitrobenzyl-acrylate, p-nitrophényléthyl-acrylate,

3,5-dinitrophényléthyl-acrylate, p-nitrophénylpropyl-acrylate et 3,5-dinitrophénylpropyl-acrylate.

3. Composition selon la revendication 1, dans laquelle ledit dérivé d'ester d'acide méthacrylique est choisi dans le groupe constitué du p-nitrobenzyl-méthacrylate, 3,5-dinitrobenzyl-méthacrylate, p-nitrophényléthyl-méthacrylate, 3,5-dinitrophényléthyl-méthacrylate, p-nitrophénylpropyl-méthacrylate et 3,5-dinitrophényléthyl-méthacrylate.

4. Composition selon la revendication 1, dans laquelle ledit polymère contient en plus un autre monomére éthylénique insaturé copolymérisable choisi dans le groupe constitué d'alkyl-acrylate, alkyl-méthacrylate, styrène, chlorure de vinyle, acétate de vinyle et acrylonitrile.

5. Composition selon la revendication 4, dans laquelle la quantité dudit monomère copolymérisable dans le copolymère produit ne dépasse pas 20% en mole.

6. Composition selon la revendication 1, dans laquelle ledit donneur d'électrons est choisi dans le groupe constitué du tétrathiotétracène, tétrathionaphtalène, tétrasélénotétracène, tétrasélénonaphtalène, antracène et pyrène.

7. Composition selon la revendication 1 ou 6, dans laquelle la proportion dudit polymère et dudit donneur d'électrons est comprise entre 1 et 10 moles du premier pour 1 mole du dernier.

8. Composition selon la revendication 1, dans laquelle la composition comprend en plus une résine liante avec une quantité ne dépassant pas 10% de la composition.

9. Composition selon la revendication 8, dans laquelle la résine liante est choisie dans le groupe constitué du poly(styrène), poly(chlorure de vinyle), copolymère chlorure de vinyle/acétate de vinyle, poly(acétate de vinyle), poly(vinyl-acétal), résines phénoliques, résines epoxy et résines alkydes.